# EUROPEAN PATENT SPECIFICATION

(11) **EP 0 560 839 B1**
(45) Date of publication and mention of the grant of the patent: **19.06.1996**
(21) Application number: 92900234.3
(22) Date of filing: 05.12.1991
(51) Int. Cl.: G01F 11/26

(54) **DOSE DISPENSER**
DOSIER- UND AUSGIESSVORRICHTUNG
DISTRIBUTEUR

(30) Priority: 06.12.1990 GB 9026606
(43) Date of publication of application: 22.09.1993
(73) Proprietor: COURTAULDS PACKAGING LIMITED, Colchester, Essex CO4 4QR (GB)
(72) Inventor: von SCHUCKMANN, Alfred E.F., D-4178 Kevelaer 2 (DE)
(74) Representative: Newby, John Ross
(86) International application number: GB9102165
(87) International publication number: WO9210727

(56) References cited:
- EP-A- 0 274 256
- EP-A- 0 335 505
- EP-A- 0 337 778
- GB-A- 393 223
- US-A- 3 391 836
- US-A- 3 567 079

## Description

### Technical Field

This invention relates to the dispensing of doses of fluid material from a body of fluid material held in a container using a dose dispenser located in the outlet of the container.

### Background Art

The simplest form of dose dispenser uses the cap of the container as a dose measure. The potential for spillage and the relative inaccuracy of this method has led to a search for alternative methods. In one of these, an open-topped measuring cup is moulded in the neck of a flexible-walled bottle and is filled from the bottle through a dip tube which opens into the cup below its rim. The bottle is squeezed in an upright position to express fluid into the cup in an amount in excess of the desired dose. The squeezing pressure is then released whereupon fluid in the cup above the dip tube outlet is sucked back into the tube. The measured dose of fluid is then poured out of the cup.

The present invention is concerned with the use of a dose dispenser in which the operations of the inlet and outlet of a dosing chamber are controlled by the reciprocal action of a piston within the dosing chamber. A dose dispenser of this description is disclosed in GB-A-393,223.

Another dose dispenser which employs a reciprocating piston within a dosing chamber is described in US-A-3,567,079. In the dose dispenser of this prior publication (see Figures 5 and 6), a conventional piston head mounted on the inner end of a shaft is a close fit within the chamber. At its innermost position in the chamber, this piston head leaves the chamber inlet open to allow ingress of liquid from the container when it is inverted. On squeezing of the flexible wall of the container, the piston is forced by hydraulic pressure on its outstroke and moves past the chamber inlet to close off the chamber from the interior of the container. The piston shaft on which the piston head is mounted extends through a narrow central outlet of the chamber and has a diameter at opposite ends which matches the internal diameter of the outlet. Between these shaft ends, the shaft is ground to form a flat side. Thus, the outlet is closed by being filled by one or the other end of the shaft at the respective limits of the piston stroke. In between these limits, the flat side of the shaft ensures that the outlet is not completely filled by the shaft so that liquid can flow through the outlet out of the chamber.

### Disclosure of the Invention

The present invention provides a container having an outlet and a flexible wall which can be squeezed to induce increased internal fluid pressure within the container, and a dose dispenser located in the container outlet for dispensing one or more doses of fluid material from the container, wherein the dose dispenser comprises an open-ended cylindrical dosing chamber having spaced end regions defining, respectively, a closable inlet through which, when open, fluid material may pass into the dosing chamber from the container and a closable outlet through which, when open, a dose of fluid material can be dispensed from the dosing chamber, a piston device comprising a shaft extending axially along the cylindrical dosing chamber and supporting spaced inlet and outlet closure members, the piston device being reciprocably slidable along a limited path within the dosing chamber between a filling position in which the inlet closure member leaves the inlet open and the outlet closure member closes the outlet, an intermediate position in which the inlet and outlet closure members close the inlet and the outlet, respectively, to define a closed volume within the dosing chamber, and a dispensing position in which the outlet closure member leaves the outlet open and the inlet closure closes the inlet, the piston device being adapted to respond to such increased fluid pressure within the container by sliding from the filling position through the intermediate position to the dispensing position, characterised in that the shaft and the inlet and outlet closure members of the piston device comprise a one-piece plastics moulding of which each of the inlet and outlet closure members is cup-shaped with a resiliently flexible rim and spans transversely across the cylindrical dosing chamber with its resiliently flexible rim sealing against the internal surface of the dosing chamber to close, respectively, the inlet or the outlet when in the appropriate axial position in the dosing chamber.

In a preferred arrangement, the dose dispenser is a snap fit and/or a friction fit within the outlet of the container. In this way, dose dispensers can be manufactured to fit containers having outlets of standard sizes. However, it is also possible to form the dosing chamber of the dose dispenser integrally with the container, for example as part of the neck of a bottle, if this is desired. When the container is to be manufactured by blow moulding, the dosing chamber may be moulded as an integral part of the container during the initial step of injection moulding the preform to be used for the blow moulding operation.

The container has a flexible wall, for example of plastics material, so that the desired increase in fluid pressure within the container needed to operate the dose dispenser can be induced by squeezing the flexible wall of the container. The container may be a thermoplastic moulding, for example a polyester bottle.

The piston device of the dosing dispenser is adapted to respond to increased internal fluid pressure within the container by having surfaces on the inlet and outlet closures against which said increased pressure can be exerted to slide the piston device as specified. With the dosing chamber full of fluid material and its inlet open, the increased fluid pressure induced in the container acts firstly on the internal surface of the outlet closure so as to cause the piston device to slide from the filling position to the intermediate position. In the intermediate position, the inlet closure of the dosing chamber has become closed and so the increased pressure induced in the container acts now upon the surface of the inlet closure which faces towards the interior of the container so as to cause the piston device to slide from the intermediate position to the dispensing position.

The dose dispenser has a dosing chamber in the form of an open-ended hollow cylinder of which the end regions define the inlet and the outlet respectively. A circular cross-section is preferred because that is a standard shape of container outlet and facilitates ease of manufacture and efficiency of use. Oval cross-sections are also of use.

The wall of the cylindrical dosing chamber may be cut-away in part to define the inlet. The cut-away part may comprise one or more windows in the wall of the dosing chamber at an end region or one or more cut-outs which define a castellated profile to the end of the cylindrical dosing chamber. In either case, the inlet closure on the piston device can remain in contact with the wall of the cylindrical dosing chamber whilst it slides across the window(s) or cut-out(s) defining the inlet in moving from the filling position to the intermediate position.

The outlet closure preferably slides out of engagement with and beyond the wall of the cylindrical dosing chamber to open the outlet when the piston device moves to the dispensing position. In order to maintain shaft alignment when the outlet closure is in this position, a guide for the shaft may be provided between the inlet and outlet closures. This guide may be attached to or moulded integrally with the shaft and may comprise a number of arms which extend to the internal surface of the cylindrical dosing chamber and slide over that surface as the piston device slides. The guide may also act as a stop which engages an abutment or abutments within the dosing chamber to limit the sliding travel of the piston device within the dosing chamber.

The piston device is moulded from plastics as a one-piece moulding. The dosing chamber is also preferably moulded from a plastics material. Polyethylene is a suitable material for the piston device because its relative softness allows good sealing of the inlet and outlet closures against the internal surface of the dosing chamber and facilitates assembly of the dispenser. Polypropylene is also a suitable material both for the piston device and for the dosing chamber.

A closure cap may be provided for the container outlet for example as a screw fit or a snap fit on the neck of the container which defines its outlet.

A method of dispensing a dose of fluid material from a body of fluid material held within a flexible-walled container and a dose dispenser according to the invention comprises, inverting the container to fill the dosing chamber with fluid material from the container whilst it is in the normal open inlet/closed outlet configuration and squeezing the flexible wall of the container to induce increased fluid pressure within the container to change the inlet/outlet configuration of the dosing chamber first to a closed inlet/closed outlet configuration whereby a dosing volume of fluid material is defined in the dosing chamber and then with increasing pressure to a closed inlet/open outlet configuration whereupon the dose of fluid material runs out of the dosing chamber and is thereby dispensed.

After dispensing of the dose as specified above, the flexible wall of the container can be released from squeezing to cause the dosing chamber to revert to the open inlet/closed outlet configuration as a result of the consequent decrease in fluid pressure within the container. The dosing chamber is now ready for dispensing a further dose. If the container has been kept in the inverted position after dispensing of the first dose, then the dosing chamber will re-fill and further squeezing of the container will result in the dispensing of another dose. In this way, single or multiple doses may be accurately dispensed without danger of spillage or hand contact with the fluid material being dispensed. Liquids are the most suitable fluid materials for dose dispensing according to the invention.

In the event that automatic retraction to the normal open inlet/closed outlet configuration does not occur when the flexible wall of the container is released from squeezing, the piston device can be pushed back to the filling position. For this purpose, the shaft of the piston device may be extended beyond the outlet closure by a member against which a thrust can be exerted to slide the piston device back to the filling position. This thrust can be provided manually or, more preferably, by engagement of the closure cap of the container as it is put into position on the container outlet, for example as it is screwed on or snapped into position depending on the method of attachment.

### Brief Description of Drawings

The invention is illustrated by way of example by the accompanying drawings in which:-
Figure 1 is a schematic section in elevation of a container and dose dispenser according to the invention in which the dose dispenser is located in the outlet neck of a flexible-walled bottle containing a liquid to be dispensed, with the piston device in the filling position, i.e. the open inlet/closed outlet configuration;
Figure 2 is a cross-section on the line II....II in Figure 1 showing the shape of the guide for the shaft of the piston device;
Figure 3 is a similar section to Figure 1 on a reduced scale with the bottle inverted and the dosing chamber of the dose dispenser filled with liquid;
Figure 4 is a view of the inverted bottle shown in Figure 3 after the flexible wall of the bottle has been squeezed to cause the piston device to slide to the intermediate position shown, i.e. the closed inlet/closed outlet configuration;
Figure 5 is a further view of the inverted bottle shown in Figure 3 after further squeezing of the flexible wall of the bottle has caused the piston device to slide to the dispensing position shown, i.e. the closed inlet/open outlet configuration, whereupon the dose of liquid is dispensed; and
Figure 6 is a schematic elevation in part vertical section of a dose dispenser for use according to the invention with some variations in design from that shown in Figures 1 to 5.

### Description of Preferred Embodiments

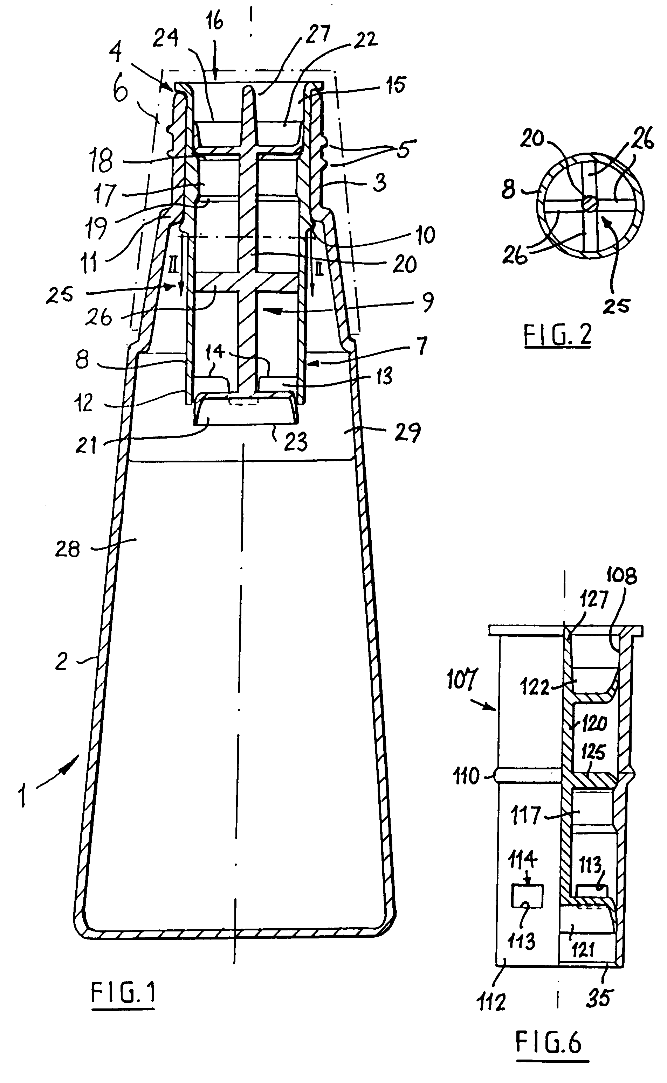

Referring to Figure 1, a bottle 1 has a flexible wall 2 and a cylindrical neck 3 which defines an outlet 4 and which has an external screw thread 5 for securing an internally-threaded closure cap 6 (shown in Figure 1 in chain line only).

A dose dispenser 7 comprises a hollow cylindrical dosing chamber 8 and a piston device 9. The dosing chamber 8 is located as a close friction fit within the neck 3 of the bottle 1 and is also provided with an external bead 10 which snaps under a rebated portion 11 of the neck 3. In this way, the dosing chamber 8 seals against the neck 3 of the bottle 1 and is secured against ejection by increased fluid pressure induced within the bottle 1.

The hollow, cylindrical dosing chamber 8 has, projecting into the interior of the bottle 1, an inlet end region 12 which defines an inlet 13 through which fluid can pass into the dosing chamber 8 from the bottle 1. The inlet end region 12 is cut-away at 14 for reasons explained below. An outlet end region 15 of the dosing chamber 8 defines an outlet 16 through which fluid can be dispensed from the dosing chamber 8.

The dosing chamber 8 is provided with a thickened wall portion which forms an internal ring 17 having sloping shoulders 18 and 19 which can act as abutments to limit the path along which the piston device 9 can slide.

The piston device 9 is a one-piece plastics moulding comprising a shaft 20 positioned along the longitudinal axis of the cylindrical dosing chamber 8 and within that chamber 8. At opposite ends of the shaft 20 are moulded inlet and outlet closures 21 and 22 respectively, each of which is cup-shaped with a resiliently flexible rim, 23 and 24 respectively. Each of the cup-shaped closures spans transversely across the cylindrical dosing chamber 8 and relies upon its resilient flexible rim to seal against the internal surface of the dosing chamber 8 and thereby close the inlet 13 and the outlet 16 of the dosing chamber 8, respectively.

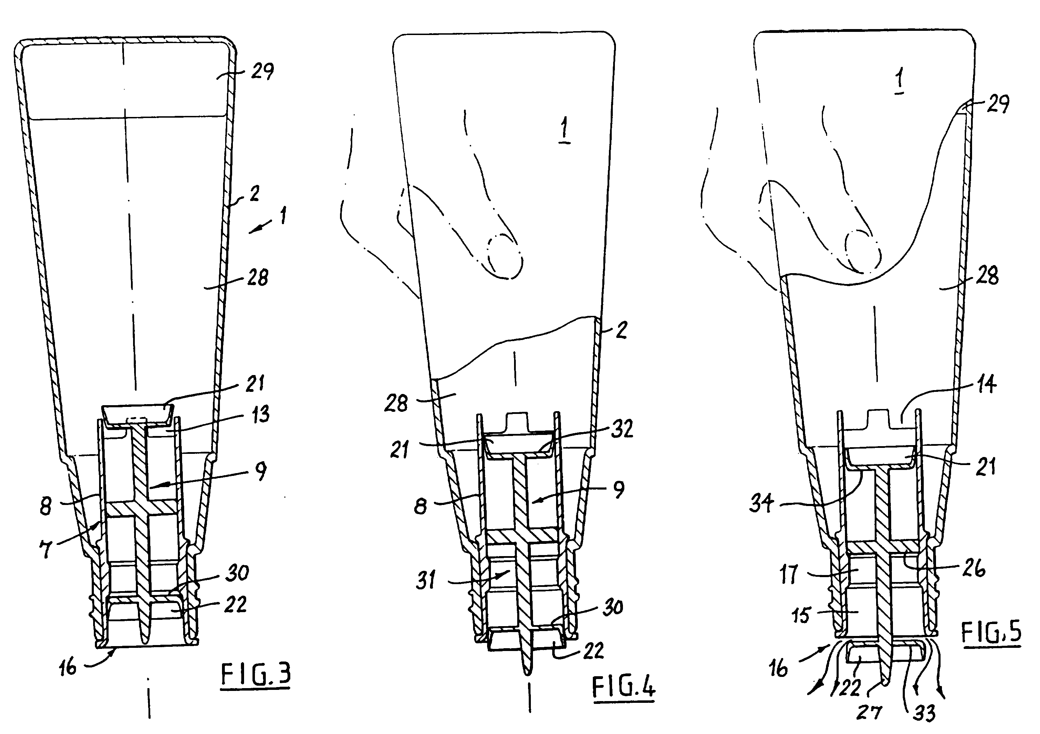

The piston device 9 is reciprocably slidable axially of the dosing chamber 8 between a filling position as shown in Figures 1 and 3 and a dispensing position as shown in Figure 5. Figure 4 shows the piston device 9 between these two positions in an intermediate position. Referring to Figures 1 and 3, the piston device 9 is in its innermost position with the outlet closure 22 butting against shoulder 18 so as to prevent further sliding of the piston device 9 towards the interior of the bottle 1. In this filling position, the inlet closure 21 nests partially within the inlet end region 12 of the dosing chamber 8 to provide ready location for subsequent sliding towards the dispensing position. The cut-outs 14 provide a castellated profile to the dosing chamber at this end 12 and define the inlet 13.

When the piston device 9 has slid to the dispensing position shown in Figure 5, the inlet closure 21 spans the cylindrical dosing chamber 8 at the location shown and thereby closes the inlet 13. At the same time, the outlet closure 22 has moved out of contact with and projects beyond the outlet end region 15 of the dosing chamber 8 to open the outlet 16. Further sliding movement of the piston device 9 in that direction is prevented by the butting of guide 25 against shoulder 19. This guide 25 is in the form of a cross, as shown in Figure 2, of which the four arms 26 extend transversely from the shaft 20 of the piston device 9 to the internal surface of the dosing chamber 8 where they make sliding contact. The function of the guide 25 is to maintain axial alignment of the shaft 20 when the outlet closure 22 moves out of contact with the outlet end region 15 of the dosing chamber 8 and also to act as a stop as mentioned.

The shaft 20 of the piston device 9 is extended beyond the outlet closure 22 by a member 27 which can be pushed to slide the piston device 9 back from the dispensing position shown in Figure 5 to the filling position shown in Figures 1 and 3 if that return sliding movement does not occur automatically.

Using the dose dispenser 7 and bottle 1 as described, the method of dispensing a dose of fluid from the bottle is as follows, referring in this case to the dispensing of a liquid:-

In Figure 1, the bottle 1 is shown in its normal upright position, as it might be on a shelf, with the dose dispenser 7 in the filling position, that is with the inlet 13 open and the outlet 16 closed. A body of liquid 28 is contained in the bottle 1. After removal of the cap 6, the bottle 1 is inverted to the position shown in Figure 3. In this position, liquid 28 enters the inlet 13 and fills the dosing chamber 8 of the dose dispenser 7.

When the flexible wall 2 of the inverted bottle 1 is manually squeezed (not shown), the air 29 in the bottle 1 is compressed and via hydraulic pressure transmitted through the liquid 28, exerts an increased pressure upon the inner surface 30 of the outlet closure 22. This causes the piston device 9 to slide to the intermediate position shown in Figure 4 in which both the inlet 13 and the outlet 16 are closed and a volume 31 of liquid held within the dosing chamber 8 is the dose to be dispensed. Continued squeezing of the flexible wall 2 of the inverted bottle 1 causes the compressed air 29 to exert pressure indirectly upon the surface 32 of the inlet closure 21. This causes the piston device 9 to slide further from the intermediate position shown in Figure 4 to the dispensing position shown in Figure 5. In this position the inlet 13 remains closed but the outlet 16 is opened so that the volume 31 of liquid runs out of the outlet 16 and is dispensed as a measured dose of liquid.

When the flexible wall 2 of the bottle 1 is released from the squeezing pressure, the pressure in the air 29 is reduced to below atmospheric pressure. This results in the atmospheric pressure acting first upon the surface 34 of the inlet closure 21 and then upon the outer surface 33 of the outlet closure 22 to cause the piston device 9 to slide back to the filling position.

If the bottle remains inverted as shown in Figure 3, then the dosing chamber 8 will refill with liquid ready for dispensing a repeat dose and the air which replaced the dispensed liquid in the previous dose will bubble up through the liquid 28 to increase the volume of air 29 trapped in the bottle 1. If the bottle has been returned to the upright position, the dosing dispenser will be as shown in Figure 1, empty of liquid, but sealed against the atmosphere by the closed outlet 16. The cap 6 can then be refitted to the bottle for storage pending the need for re-use.

A dose dispenser having variations in design is shown in Figure 6 in which reference numerals for the features shown are as used in relation to the dose dispenser shown in Figures 1 to 5 with the addition of 100. In this case, the inlet 113 is in the form of windows 114 through the wall of the cylindrical dosing chamber 108 at the inlet end region 112 but spaced from an inner end 35 thereof.

The internal ring 117 formed by the thickened wall portion of the dosing chamber 108 is positioned further down the dosing chamber 108 towards the inlet end region 112 and the guide 125 on the shaft 120 of the piston device 109 is positioned further up the shaft 120 towards the outlet closure 122. This places the guide 125 outwardly of the ring 117 so that it butts against the ring 117 when the piston device 109 slides inwardly to limit the inward movement of the piston device 109. It is engagement of the inlet closure 121 with the ring 117 that limits outward movement of the piston device 109.

## Claims

1. A container (1) having an outlet (4) and a flexible wall (2) which can be squeezed to induce increased internal fluid pressure within the container (1), and a dose dispenser (7) located in the container outlet (4) for dispensing one or more doses (31) of fluid material (28) from the container (1) wherein the dose dispenser (7) comprises an open-ended cylindrical dosing chamber (8) having spaced end regions (12, 15) defining, respectively, a closable inlet (13) through which, when open, fluid material (28) may pass into the dosing chamber (8) from the container (1) and a closable outlet (16) through which, when open, a dose (31) of fluid material (28) can be dispensed from the dosing chamber (8), a piston device (9) comprising a shaft (20) extending axially along the cylindrical dosing chamber (8) and supporting spaced inlet and outlet closure members (21, 22) the piston device (9) being reciprocably slidable along a limited path within the dosing chamber (8) between a filling position in which the inlet closure member (21) leaves the inlet (13) open and the outlet closure member (22) closes the outlet (16), an intermediate position in which the inlet and outlet closure members (21, 22) close the inlet (13) and the outlet (16), respectively, to define a closed volume within the dosing chamber (8), and a dispensing position in which the outlet closure member (22) leaves the outlet (16) open and the inlet closure member (21) closes the inlet (13), the piston device (9) being adapted to respond to such increased fluid pressure within the container (1) by sliding from the filling position through the intermediate position to the dispensing position, **characterised in that** the shaft (20) and the inlet and outlet closure members (21, 22) of the piston device (9) comprise a one-piece plastics moulding of which each of the inlet and outlet closure members (21, 22) is cup-shaped with a resiliently flexible rim (23, 24) and spans transversely across the cylindrical dosing chamber (8) with its resiliently flexible rim (23, 24) sealing against the internal surface of the dosing chamber (8) to close, respectively, the inlet (13) or the outlet (16) when in the appropriate axial position in the dosing chamber (8).

2. A container (1) and a dose dispenser (7) as claimed in claim 1, wherein the outlet closure member (22) slides out of engagement with and beyond the wall of the cylindrical dosing chamber (8) at its outlet end region (15) to open the outlet (16) when the piston device (9) moves to the dispensing position, **characterised in that** a guide (25) is provided for the shaft (20) of the piston device (9) between the inlet and outlet closure members (21, 22) to maintain shaft alignment when the outlet closure member (22) slides out of engagement with the wall of the cylindrical dosing chamber (8).

3. A container (1) and a dose dispenser (7) as claimed in claim 1 or claim 2 **characterised in that** the shaft (20) of the piston device (9) is extended beyond the outlet closure member (22) by a member (27) against which a thrust can be exerted to slide the piston device (9) from the dispensing position to the filling position.

4. A container (1) and a dose dispenser (7) as claimed in any preceding claim, **characterised in that** the container (1) and the dosing chamber (8) also comprise plastics material.

5. A container (1) and a dose dispenser (7) as claimed in claim 4, **characterised in that** the dosing chamber (8) of the dose dispenser (7) is formed integrally with the outlet (3) of the container (1).

6. A container (1) and a dose dispenser (7) as claimed in any preceding claim, **characterised in that** a removable closure cap (6) is provided for the container outlet.

7. A container (1) and a dose dispenser (7) as claimed in claim 6, **characterised in that** the cap (6) engages an external screw thread (5) on a neck (3) of the container (1).

## Patentansprüche

1. Behälter (1) mit einem Auslaß (4) und einer flexiblen Wand (2), die gequetscht werden kann, um in dem Behälter einen erhöhten Fluidinnendruck herbeizuführen, und mit einem in dem Behälterauslaß (4) angeordneten Portionierspender (7) für die Abgabe einer oder mehrerer Portionen (31) eines Fluidmaterials (28) aus dem Behälter (1), wobei der Portionierspender (7)
- eine zylindrische, ein offenes Ende aufweisende Portionierkammer (8) mit im Abstand angeordneten Endbereichen (12, 15), die jeweils einen schließbaren Einlaß (13), durch den, wenn er offen ist, Fluidmaterial (28) aus dem Behälter (1) in die Portionierkammer (8) hindurchgehen kann, und einen schließbaren Auslaß (16) bilden, durch den, wenn er offen ist, eine Portion (31) des Fluidmaterials (28) aus der Portionierkammer (8) abgegeben werden kann,
- und eine Kolbenvorrichtung (9) mit einem Schaft (20) aufweist, der sich axial längs der zylindrischen Portionierkammer (8) erstreckt und im Abstand angeordnete Einlaß- und Auslaßverschlußelemente (21, 22) trägt,
- wobei die Kolbenvorrichtung (9) längs eines begrenzten Weges in der Portionierkammer (8) zwischen einer Füllposition, in der das Einlaßverschlußelement (21) den Einlaß (13) offen läßt und das Auslaßverschlußelement (22) den Auslaß (16) verschließt, einer Zwischenstellung, in der das Einlaß- und Auslaßverschlußelement (21, 22) den Einlaß (13) bzw. den Auslaß (16) schließen und ein geschlossenes Volumen in der Portionierkammer (8) bilden, und einer Spendeposition hin- und her gleitend verschiebbar ist, in welcher das Auslaßverschlußelement (22) den Auslaß (16) offenläßt und das Einlaßverschlußelement (21) den Einlaß (13) schließt, und
- wobei die Kolbenvorrichtung (9) geeignet ist, auf einen solchen erhöhten Fluiddruck in dem Behälter (1) durch Gleitverschiebung aus der Füllposition über die Zwischenposition in die Spendeposition anzusprechen,
dadurch gekennzeichnet,
- daß der Schaft (20) und das Einlaß- und Auslaßverschlußelement (21, 22) der Kolbenvorrichtung (9) ein einstükkiges Kunststofformteil aufweisen, bei welchem jeweils das Einlaß- und Auslaßverschlußelement (21, 22) becherförmig mit einem elastisch flexiblen Rand (23, 24) ausgebildet sind und die zylindrische Portionierkammer (8) quer überspannen, wobei der elastisch flexible Rand (23, 24) gegen die Innenfläche der Portionierkammer (8) abdichtet, um jeweils den Einlaß (13) oder den Auslaß (16) abzudichten, wenn er sich in der geeigneten axialen Position in der Portionierkammer (8) befindet.

2. Behälter (1) und Portionierspender (7) nach Anspruch 1, bei welchen sich das Auslaßverschlußelement (22) aus dem Eingriff mit der Wand der zylindrischen Portionierkammer (8) an ihrem Auslaßendbereich (15) heraus und über sie hinaus gleitend verschiebt, um den Auslaß (16) zu öffnen, wenn sich die Kolbenvorrichtung (9) in die Spendeposition bewegt, dadurch gekennzeichnet, daß für den Schaft (20) der Kolbenvorrichtung (9) zwischen dem Einlaß- und Auslaßverschlußelement (21, 22) eine Führung (25) vorgesehen ist, um die Schaftausrichtung beizubehalten, wenn sich das Auslaßverschlußelement (22) gleitend aus dem Eingriff mit der Wand der zylindrischen Portionierkammer (8) heraus verschiebt.

3. Behälter (1) und Portionierspender (7) nach Anspruch 1 oder Anspruch 2, dadurch gekennzeichnet, daß der Schaft (20) der Kolbenvorrichtung (9) sich über das Auslaßverschlußelement (22) durch ein Teil (27) erstreckt, gegen welches ein Druck ausgeübt werden kann, um die Kolbenvorrichtung (9) aus der Spendeposition in die Füllposition gleitend zu verschieben.

4. Behälter (1) und Portionierspender (7) nach einem vorhergehenden Anspruch, dadurch gekennzeichnet, daß der Behälter (1) und die Portionierkammer (8) ebenfalls Kunststoff aufweisen.

5. Behälter (1) und Portionierspender (7) nach Anspruch 4, dadurch gekennzeichnet, daß die Portionierkammer (8) des Portionierspenders (7) in einem Stück mit dem Auslaß (3) des Behälters (1) ausgebildet ist.

6. Behälter (1) und Portionierspender (7) nach einem vorhergehenden Anspruch, dadurch gekennzeichnet, daß für den Behälterauslaß eine entfernbare Verschlußkappe (6) vorgesehen ist.

7. Behälter (1) und Portionierspender (7) nach Anspruch 6, dadurch gekennzeichnet, daß die Kappe (6) an einem Außenschraubgewinde (5) auf einem Hals (3) des Behälters (1) angreift.

## Revendications

1. Ensemble d'un récipient (1) ayant un orifice de sortie (4) et une paroi souple (2) qui peut être serrée pour induire une augmentation de la pression hydraulique interne dans le récipient (1), et d'un distributeur - doseur (7) placé dans l'orifice de sortie (4) du récipient afin de distribuer une ou plusieurs doses (31) de matière fluide (28) à partir du récipient (1), dans lequel le distributeur - doseur (7) comprend une chambre de dosage cylindrique aux extrémités ouvertes (8) ayant des régions d'extrémité (12, 15) espacées, définissant respectivement un orifice d'entrée qui peut se fermer (13), à travers lequel, lorsqu'il est ouvert, la matière fluide (28) peut circuler du récipient (1) à la chambre de dosage (8) et un orifice de sortie (16) qui peut se fermer, à travers lequel, lorsqu'il est ouvert, une dose (31) de matière fluide (28) peut être délivrée par la chambre de dosage (8), un dispositif de piston (9) comprenant un arbre (20) partant axialement le long de la chambre de dosage (8) cylindrique et portant des éléments espacés de fermeture (21, 22) de l'orifice d'entrée et de l'orifice de sortie, le dispositif de piston (9) pouvant coulisser de manière alternative suivant un trajet limité dans la chambre de dosage (8) entre une positon de remplissage dans laquelle l'élément de fermeture (21) de l'orifice d'entrée laisse l'orifice d'entrée (13) ouvert et l'élément de fermeture (22) de l'orifice de sortie ferme l'orifice de sortie (16), une position intermédiaire dans laquelle les éléments de fermeture de l'orifice d'entrée et de l'orifice de sortie (21, 22) ferment, respectivement, l'orifice d'entrée (13) et l'orifice de sortie (16) pour définir un volume enfermé dans la chambre de dosage (8), et une position de distribution dans laquelle l'élément de fermeture de l'orifice de sortie (22) laisse l'orifice de sortie (16) ouvert et l'élément de fermeture de l'orifice d'entrée (21) ferme l'orifice d'entrée (13), le dispositif de piston (9) étant conçu pour répondre à une augmentation de la pression hydraulique dans le récipient (1) en coulissant de la position de remplissage en passant par la position intermédiaire jusqu'à la position de distribution, **caractérisé en ce que** l'arbre (20) et les éléments de fermeture de l'orifice d'entrée et de l'orifice de sortie (21, 22) du dispositif de piston (9) comprennent un moulage en matière plastique d'une seule pièce dont chaque élément de fermeture de l'orifice d'entrée et de l'orifice de sortie (21, 22) est en forme de coupelle avec un rebord élastiquement souple (23, 24) et s'étend transversalement d'un bord à l'autre de la chambre de dosage cylindrique (8), son rebord élastiquement souple assurant l'étanchéité vis-à-vis de la surface interne de la chambre de dosage (8) pour fermer, respectivement, l'orifice d'entrée (13) et l'orifice de sortie (16) lorsqu'il est dans une position axiale appropriée dans la chambre de dosage (8).

2. Ensemble d'un récipient (1) et d'un distributeur - doseur (7) selon la revendication 1, dans lequel l'élément de fermeture de l'orifice d'entrée (22) en coulissant se déconnecte d'avec la paroi de la chambre de dosage (8) et coulisse au-delà de celle-ci au niveau de sa région terminale de sortie (15) pour ouvrir l'orifice de sortie (16) lorsque le piston (9) se déplace dans la position de distribution, **caractérisé en ce qu'**un guide (25) est prévu pour l'axe (20) du dispositif de piston (9) entre les éléments de fermeture de l'orifice d'entrée et de l'orifice de sortie (21, 22) pour maintenir l'alignement de l'arbre lorsque l'élément de fermeture de sortie (22) en coulissant se déconnecte d'avec la paroi de la chambre de dosage cylindrique (8).

3. Ensemble d'un récipient (1) et d'un distributeur - doseur (7) selon la revendication ou 2, **caractérisé en ce que** l'arbre (20) du dispositif de piston (9) se prolonge au-delà de l'élément de fermeture de l'orifice de sortie (22) par un élément (27) contre lequel une poussée peut être exercée pour faire coulisser le dispositif de piston (9) de la position de distribution à la position de remplissage.

4. Ensemble d'un récipient (1) et d'un distributeur - doseur (7) selon l'une quelconque des revendications précédentes, **caractérisé en que** le récipient (1) et la chambre de dosage (8) comprennent également des matières plastiques.

5. Ensemble d'un récipient (1) et d'un distributeur - doseur (7) selon la revendication 4, **caractérisé en ce que** la chambre de dosage (8) du distributeur - doseur (7) est formée d'une seule pièce avec l'orifice de sortie (3) du récipient (1)

6. Ensemble d'un récipient (1) et d'un distributeur - doseur (7) selon l'une quelconque des revendications précédentes, **caractérisé en ce qu'**un bouchon de fermeture amovible (6) est prévu à la sortie du récipient.

7. Ensemble d'un récipient (1) et d'un distributeur - doseur (7) selon la revendication 6, **caractérisé en que** le bouchon (6) coopère avec un filetage externe (5) sur un goulot (3) du récipient (1).
